# EUROPEAN PATENT APPLICATION

(11) **EP 4 661 169 A1**
(43) Date of publication of application: **10.12.2025**
(21) Application number: 24868453.2
(22) Date of filing: 24.07.2024
(51) Int. Cl.: H01M 50/124, H01M 50/126, H01M 50/143, H01M 50/358, H01M 50/105, H01M 50/211, H01M 50/249

(54) **POUCH FILM, METHOD FOR MANUFACTURING POUCH FILM, AND BATTERY CELL COMPRISING SAME**

(30) Priority: 20.09.2023 KR 20230125883
(71) Applicant: LG Energy Solution, Ltd., Seoul 07335 (KR)
(72) Inventor: YUN, Hyun-Seop, Daejeon 34122 (KR)
(74) Representative: Plasseraud IP
(86) International application number: PCT/KR2024/010699
(87) International publication number: WO 2025/063473

(57) **Abstract**

A pouch film according to the present disclosure may include a base layer; a plurality of resin layers formed on one surface and the other surface of the base layer, respectively, with the base layer interposed therebetween; and a fire-resistant coating layer formed by being coated on at least one resin layer of the plurality of resin layers.

## Description

### TECHNICAL FIELD

The present disclosure relates to a pouch film, a method for manufacturing the pouch film, and a battery cell including the same, and more specifically, to a pouch film capable of enhancing safety by improving fire resistance and enabling easy discharge of discharged substances such as venting gas or the like, a method for manufacturing the pouch film, and a battery cell including the same. This application is based on and claims priority from Korean Patent Application No. 10-2023-0125883, filed on September 20, 2023, with the Korean Intellectual Property Office, the disclosure of which is incorporated herein in its entirety by reference.

### BACKGROUND ART

A semi-permanent battery that converts electrical energy into chemical energy and can be repeatedly charged and discharged is called a secondary battery to distinguish it from a primary battery that cannot be reused after being used once.

Secondary batteries include lithium-ion secondary batteries, nickel cadmium (Ni-Cd) batteries, lead-acid batteries, nickel hydrogen (Ni-MH) batteries, air zinc batteries, alkaline manganese batteries, and the like. Among these, lead-acid batteries and lithium secondary batteries are the most actively commercialized secondary batteries. In particular, lithium-ion secondary batteries have advantages such as high energy storage density, light weight and miniaturization, excellent safety, low discharge rate, and long life, so they have been actively utilized as electric vehicle batteries recently.

Currently, the operating voltage of a single lithium-ion secondary battery cell is about 2.5 V to 4.5 V. Therefore, in order to apply a secondary battery as an energy source for an electric vehicle, a plurality of lithium-ion battery cells are connected in series and/or in parallel to form a battery module, and the battery modules are connected in series and/or in parallel to form a battery pack.

These lithium-ion secondary batteries are classified into cylindrical batteries and prismatic batteries in which the electrode assembly is embedded into a cylindrical or prismatic metal can, and pouch-type batteries in which the electrode assembly is embedded into a pouch unit of an aluminum laminate sheet, depending on the shape of the battery case. Here, the pouch unit constitutes the exterior material of the secondary battery and is manufactured by pressing a flexible pouch film to form a receiving portion, and the secondary battery is manufactured by accommodating the electrode assembly in the receiving portion and sealing the side.

On the other hand, since the secondary battery involves a chemical reaction during charging and discharging, its performance may be degraded when used in an environment higher than the appropriate temperature, and there is always a possibility of unexpected ignition or explosion when heat control is not performed at the appropriate temperature. Additionally, the battery module has a structure in which these secondary batteries are intensively accommodated inside the module housing, and thus, if any one of the secondary batteries becomes a trigger cell due to heat runaway, it may more easily ignite a chain reaction of secondary batteries due to rapid thermal propagation of venting gases and flames to the surrounding secondary batteries. When a thermal event occurs, the venting gas and flames come into direct contact with the pouch film.

Accordingly, there is a need for technology development for a layered structure of a pouch film with enhanced fire resistance so that the heat transfer of the flame generated from the trigger cell to other neighboring secondary batteries may be delayed as much as possible when a thermal event occurs. In addition, if the layered structure of the pouch film is a structure that induces a rapid and easy discharge of discharged substances such as venting gas discharged inside the trigger cell, heat accumulation inside the trigger cell and heat transfer to other cells may be minimized.

### DISCLOSURE

### Technical Problem

The present disclosure is designed to solve the problems of the related art, and therefore the present disclosure is directed to providing a pouch film that may delay the heat transfer of the flame generated from the trigger cell to other neighboring secondary batteries as much as possible when a thermal event occurs and at the same time, may induce a rapid and easy discharge of discharged substances such as venting gas discharged inside the trigger cell to minimize heat accumulation and heat transfer to other cells, thereby improving the safety of the cell.

The present disclosure is also directed to providing a manufacturing method for manufacturing such a pouch film.

The present disclosure is still also directed to providing a battery cell including such a pouch film.

Technical problems to be solved by the present disclosure are not limited to the above-described problems, and other problems not mentioned herein may be clearly understood by those skilled in the art from the following description of the present disclosure.

### Technical Solution

A pouch film according to the present disclosure for solving the above problem may include a base layer; a plurality of resin layers formed on one surface and the other surface of the base layer, respectively, with the base layer interposed therebetween; and a fire-resistant coating layer formed by being coated on at least one resin layer of the plurality of resin layers.

The base layer, the plurality of resin layers, and the fire-resistant coating layer may be provided to be stacked in a layered structure, and the fire-resistant coating layer may be disposed on the outermost surface of the layered structure.

The plurality of resin layers may include a first resin layer formed on the lower surface of the base layer based on the stacking direction of the layered structure; and a second resin layer formed on the upper surface of the base layer based on the stacking direction of the layered structure, wherein the fire-resistant coating layer may be formed by being coated on the lower surface of the first resin layer and the upper surface of the second resin layer, respectively.

The fire-resistant coating layer may be formed by being coated on the entire area of the lower surface of the first resin layer or the upper surface of the second resin layer.

The pouch film may be used for sealing the electrode assembly, wherein the fire-resistant coating layer may be formed by being coated on one area of the lower surface of the first resin layer or the upper surface of the second resin layer, and the area where the fire-resistant coating layer is not coated may form a discharge path for the discharged substances including the venting gas generated from the electrode assembly.

The discharge path may be formed by the difference in coating thickness that occurs depending on whether the fire-resistant coating layer is coated or not.

The discharge path may be formed in a first direction on the plate surface of the first resin layer or the second resin layer, in a second direction perpendicular to the first direction, or in directions of partially mixing the first direction and the second direction.

The fire-resistant coating layer may be made of a ceramic material, an inorganic material, a MICA material, an aerogel, or a combination thereof.

The thickness of the fire-resistant coating layer may be 0.03 to 0.05 mm.

A method for manufacturing the pouch film according to the present disclosure for solving the above problem may include a step of applying and laminating a first resin layer to one surface of a base layer; a step of applying and laminating a second resin layer to the other surface of the base layer; and a step of coating a fire-resistant coating layer on at least one of the first resin layer or the second resin layer.

In the step of coating the fire-resistant coating layer, a refractory material may be applied and then squeezed to adjust the thickness.

The pouch film may be used for sealing the electrode assembly, and in the step of coating the fire-resistant coating layer, the fire-resistant coating layer may be formed by being coated on the entire area of the plate surface of the first resin layer or the second resin layer, or on one area of the plate surface of the first resin layer or the second resin layer, and the area where the fire-resistant coating layer is not coated may form a discharge path for the discharged substances including the venting gas generated from the electrode assembly.

The area where the fire-resistant coating layer is not coated may be formed by a masking treatment along the discharge path on the first resin layer or the second resin layer, and then removing the masking after the squeeze is performed.

Additionally, a battery cell according to the present disclosure for solving the above problem may include an electrode assembly; and a pouch unit having a receiving portion in which the electrode assembly is accommodated, wherein the pouch unit may be provided by processing with a pouch film in which a fire-resistant coating layer is coated on at least one surface of one surface facing the electrode assembly or the other surface opposite to the one surface.

The pouch film may be provided to be stacked in a layered structure, and the fire-resistant coating layer may be disposed on the outermost surface of the layered structure.

The pouch film may include a base layer; and a plurality of resin layers formed on one surface and the other surface of the base layer, respectively, with the base layer interposed therebetween, wherein the fire-resistant coating layer may be formed by being coated on at least one resin layer of the plurality of resin layers, respectively.

The plurality of resin layers may include a first resin layer formed on the lower surface of the base layer based on the stacking direction of the layered structure; and a second resin layer formed on the upper surface of the base layer based on the stacking direction of the layered structure, wherein the fire-resistant coating layer may be formed by being coated on the lower surface of the first resin layer and the upper surface of the second resin layer.

Additionally, according to the present disclosure, a battery module including the above-described battery cell may be provided.

Here, the fire-resistant coating layer may be disposed on the outermost surface of the pouch film and may be formed by being coated on one area, and the area where the fire-resistant coating layer is not coated may form a discharge path for the discharged substances including the venting gas generated from the electrode assembly.

Additionally, according to the present disclosure, a vehicle including the above-described battery module may be provided.

### Advantageous Effects

According to one aspect of the present disclosure, the outermost outer surface of the pouch unit (the upper surface of the second resin layer of the pouch film) may be coated with a fire-resistant coating layer to enhance the fire resistance, so that when a thermal event occurs, the heat transfer phenomenon of the flame generated from the trigger cell to other neighboring secondary battery may be delayed as much as possible.

Additionally, according to one aspect of the present disclosure, the outermost outer surface of the pouch unit or the inner wall surface of the receiving portion (the lower surface of the first resin layer of the pouch film) may be coated with a fire-resistant coating layer, so that a rapid and easy discharge of discharged substances such as venting gas discharged inside the trigger cell may be induced. Accordingly, heat accumulation in the trigger cell and heat transfer to other cells may be minimized, thereby improving the safety of the cell.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view schematically showing a battery cell including a pouch film according to an embodiment of the present disclosure.
FIG. 2 is a cross-sectional view of the major configurations of FIG. 1.
FIG. 3 is a schematic cross-sectional view of a pouch film according to an embodiment of the present disclosure.
FIG. 4 is a perspective view of a pouch film according to an embodiment of the present disclosure.
FIG. 5 is a photograph showing a flame test performed while coating a fire-resistant coating layer on one surface of a pouch film according to an embodiment of the present disclosure.
FIGS. 6 to 8 are views of modified examples of FIG. 4 and show a state in which various types of discharge paths are formed in a first resin layer.
FIG. 9 is a schematic diagram of a squeeze process of a pouch film according to an embodiment of the present disclosure.
FIG. 10 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

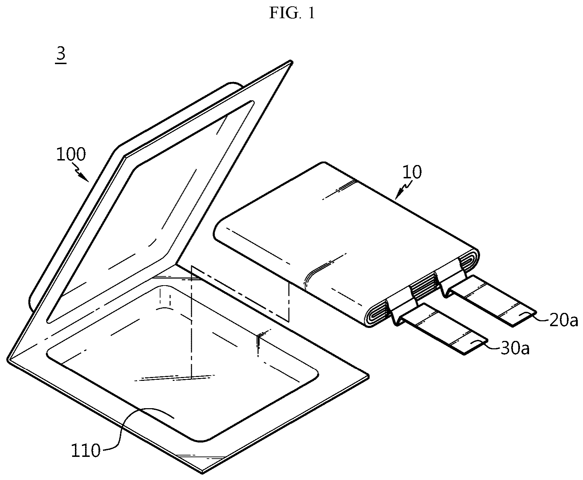

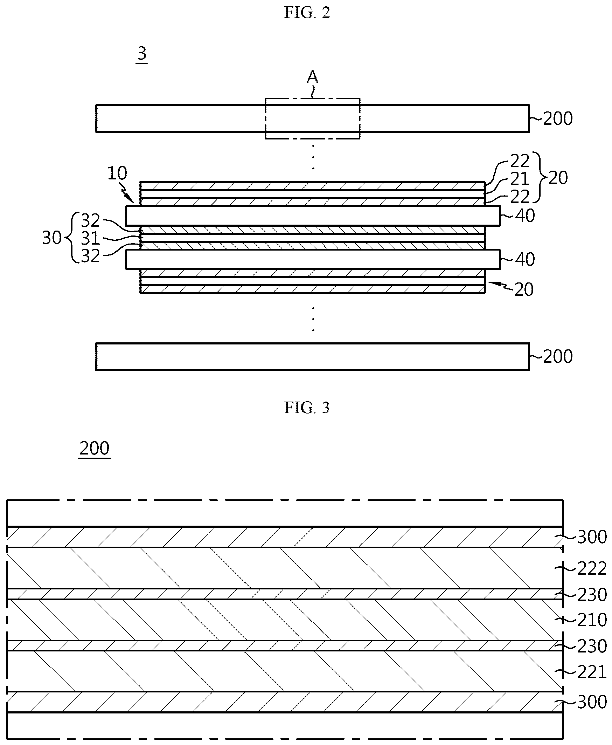

FIG. 1 is a view schematically showing a battery cell including a pouch film according to an embodiment of the present disclosure, and FIG. 2 is a schematic cross-sectional view of the major configurations of FIG. 1.

Referring to FIGS. 1 and 2, a battery cell 3 according to the present disclosure may include an electrode assembly 10 and a pouch unit 100 having a receiving portion 110 in which the electrode assembly 10 is accommodated.

In the electrode assembly 10, a plurality of positive electrodes 20 and a plurality of negative electrodes 30 may be alternately stacked with a separator 40 interposed therebetween.

The positive electrode 20 may include a positive electrode active material coating layer 22 on at least one of both surfaces of a positive electrode current collector 21. For example, the positive electrode 20 may include the positive electrode active material coating layer 22 on both surfaces of the positive electrode current collector 21. The negative electrode 30 may include a negative electrode active material coating layer 32 on at least one of both surfaces of a negative electrode current collector 31. For example, the negative electrode 30 may include the negative electrode active material coating layer 32 on both surfaces of the negative electrode current collector 31. On one side of the positive electrode 20 and the negative electrode 30, electrode leads 20a, 30a welded to an electrode tab may protrude. Although not shown in the drawing, the electrode leads 20a, 30a may be connected to external electrical lines such as busbars, terminals, or the like to be manufactured into a battery module or a battery pack. The separator 40 may be interposed between the positive electrode 20 and the negative electrode 30. The separator 40 is made of a porous material, which insulates the positive electrode 20 and the negative electrode 30 from each other, and provides a passage through which ions move.

The positive electrode 20 and the negative electrode 30 may be alternately stacked and disposed in the vertical direction with the separator 40 between them, as shown in FIGS. 1 and 2, to form an electrode assembly 10. And, the electrode assembly 10 may be accommodated in the receiving portion 110 of the pouch unit 100.

The pouch unit 100 may have a receiving portion 110 in which the electrode assembly 10 is accommodated, as shown in FIG. 1. The pouch unit 100 may be formed by forming a pouch film 200 through press processing or the like, so that the receiving portion 110, which is a predetermined space corresponding to the size of the electrode assembly 10, may be formed in the central area. The size of the receiving portion 110 in the drawing is exaggerated for convenience of description.

The receiving portion 110 may be sealed. That is, the edge portions of the pouch film 200 disposed on the upper side and the pouch film 200 disposed on the lower side may be bonded to each other by thermal fusion, or the like. Alternatively, an adhesive layer may be applied to the edge portions of each pouch film 200 to be bonded.

As shown in FIG. 2, the space below the pouch film 200 disposed on the upper side corresponds to the inside of the pouch unit 100 and may be a part facing the electrode assembly 10. The space above the pouch film disposed on the upper side corresponds to the outside of the pouch unit 100 and may be a part facing another neighboring battery cell 3.

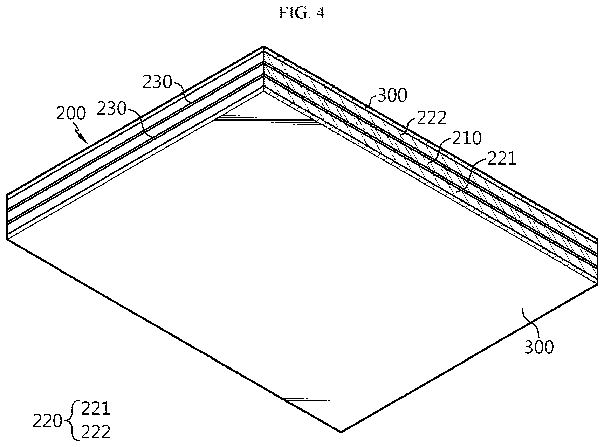

FIG. 3 is a schematic cross-sectional view of a pouch film according to an embodiment of the present disclosure and is an enlarged view of part A of FIG. 2, and FIG. 4 is a perspective view of a pouch film according to an embodiment of the present disclosure.

Referring to FIGS. 3 and 4, the pouch unit 100 may be prepared by processing the pouch film 200 in which a fire-resistant coating layer 300 is coated on at least one surface of one surface facing the electrode assembly 10 and the other surface opposite to the one surface. And, the pouch film 200 is used for sealing the electrode assembly.

That is, in FIG. 3, the fire-resistant coating layer 300 may be coated on the outermost upper surface of the pouch film 200 to enhance fire resistance. The coating of the fire-resistant coating layer 300 on the outermost outer surface of the pouch unit 100 means that the flame propagation to the corresponding battery cell 3 from other external neighboring battery cell may be blocked or delayed. That is, the outer surface of the receiving portion 110 is surrounded by the fire-resistant coating layer 300, and this fire-resistant coating layer 300 may protect the electrode assembly 10 therein. Accordingly, when a flame generated from any one trigger cell is propagated to another secondary battery in the event of a thermal event, the fire-resistant coating layer 300 on the outermost outer surface of the pouch unit 100 may block the flame, thereby delaying heat transfer.

Additionally, the inner wall surface of the receiving portion 110 may also be coated with the fire-resistant coating layer 300. That is, the fire-resistant coating layer 300 may be coated on the outermost lower surface of the pouch film 200 of FIG. 3. In this case, the ignition of the pouch film 200 of the corresponding pouch unit 100 from discharged substances such as the venting gas discharged inside the trigger cell may be delayed as much as possible, and a rapid and easy discharge of the discharged substances may be induced, which will be described in detail later.

Hereinafter, the pouch film 200 will be described in detail.

The pouch film 200 may include a base layer 210, a plurality of resin layers 220, and a fire-resistant coating layer 300 formed by being coated on any one resin layer 220 of the plurality of resin layers 220.

Here, the configurations of the pouch film 200, that is, the base layer 210, the plurality of resin layers 220, and the fire-resistant coating layer 300, may be provided to be stacked in a layered structure. Specifically, the base layer 210 may be disposed between a pair of resin layers 220. And, based on FIG. 3, the fire-resistant coating layer 300 may be disposed on the upper surface of the resin layer 222 disposed above the base layer 210, and the fire-resistant coating layer 300 may be disposed on the lower surface of resin layers 221 disposed below the base layer 210. That is, the fire-resistant coating layer 300 may be disposed on the outermost upper surface and lower surface of the layered structure, respectively.

Specifically, the pouch film 200 according to this embodiment may include the base layer 210.

The base layer 210 may be used as a barrier layer for preventing the penetration of oxygen or moisture from the outside. The base layer 210 may be made of any one material selected from aluminum or an aluminum alloy. For example, the base layer 210 may use a soft aluminum foil, and preferably, an aluminum foil containing iron may be used to impart moldability to the aluminum foil. Alternatively, the base layer 210 may use an alloy in which various metals and non-metals are added to pure aluminum, or a stainless alloy. Here, the aluminum alloy may selectively be an alloy including an element selected from the group consisting of silicon, boron, germanium, arsenic, antimony, copper, magnesium, manganese, zinc, lithium, iron, chromium, vanadium, titanium, bismuth, potassium, tin, lead, zirconium, nickel, cobalt, and combinations thereof.

It may be preferable that the thickness of such base layer 210 is 10 to 100 µm in consideration of processability, moisture blocking ability, and the like.

Meanwhile, the base layer 210 may be surface treated to improve adhesion with the inner resin layer 220. The surface treatment may include etching, degreasing, anticorrosion treatment, denaturation treatment, corrosion resistance treatment, and the like. The surface treatment may be performed at each process during the processing of the pouch film 200, if necessary or for functional reasons.

The pouch film 200 according to this embodiment may include a plurality of resin layers 220 formed on one surface and the other surface of the base layer 210, respectively, with the base layer 210 interposed therebetween.

Here, the plurality of resin layers 220 may include a first resin layer 221 formed on one surface of the base layer 210 and a second resin layer 222 formed on the other surface of the base layer 210.

That is, the first resin layer 221 may be formed on the lower surface of the base layer 210 based on the stacking direction of the layered structure. The first resin layer 221 may be a layer substantially facing the electrode assembly 10.

The first resin layer 221 may be made of a polyolefin-based (CPP) resin, a polyolefin ketone resin, an elastomer, or a combination thereof. In addition, the first resin layer 221 may be made of a polybutylene-based resin, an ethylene copolymer, a propylene copolymer, a polyester-based resin, a polyamide-based resin, a polycarbonate-based resin, a fluorine-based resin, a silicone-based resin, or the like.

The thickness of the first resin layer 221 may preferably be 20 to 100 µm, and in the drawing, both the first resin layer 221 and the second resin layer 222 are shown to have the same thickness as the base layer 210. The first resin layer 221 may be selected to have a different thickness in consideration of insulation and electrolyte resistance.

The second resin layer 222 may be formed on the upper surface of the base layer 210 based on the stacking direction of the layered structure. The second resin layer 222 may correspond to the outer surface of the pouch unit 100, and as a part that directly contacts the module case or the like, it is necessary to secure insulation. Accordingly, the second resin layer 222 may be made of any one selected from polyamide, polyester, and nylon films, and in particular, the second resin layer 222 may be preferably nylon. The thickness of such second resin layer 222 may be 10 to 30 µm, and the thickness may be adjusted in consideration of insulation and moldability.

An adhesive layer 230 may be interposed between the base layer 210 and each of the resin layers 220.

Meanwhile, when a thermal event occurs, the venting gas and flame directly contact the pouch film 200 constituting the exterior material of the secondary battery, and when the pouch film 200 lacks fire resistance, there is a concern that the flame generated from the trigger cell may easily transfer heat to another neighboring secondary battery.

Accordingly, the pouch film 200 according to this embodiment may include a fire-resistant coating layer 300 formed by being coated on the pair of resin layers 220.

The fire-resistant coating layer 300 may be disposed on the outermost surface in the layered structure of the pouch film 200. That is, the fire-resistant coating layer 300 may be formed by being coated on the lower surface of the first resin layer 221 and the upper surface of the second resin layer 222.

The fire-resistant coating layer 300 may be made of a ceramic material, an inorganic material, a MICA material, an aerogel, or a combination thereof, and any other material that has flame blocking performance, and is fire-resistant and heat-resistant may be applied.

For example, the fire-resistant coating layer 300 may be made of a ceramic material. The fire-resistant coating layer 300 may be coated by adding some ceramic powder or the like to an organic material (e.g., a fluorine resin). The fire-resistant coating layer 300 may be formed by applying a coating agent including ceramic powder and curing at room temperature.

For example, the coating agent may be a slurry obtained by mixing ceramic fine powder such as alumina, silica, or the like with water, an inorganic dispersant, or the like. It may also further include an inorganic oxide (K₂O, BaO, etc.) that enables the formation of a glassy substance. In the present disclosure, such a slurry type coating agent may be applied to the surface of the first resin layer 221 and/or the second resin layer 222 and cured to form the fire-resistant coating layer 300. The coating may be applied by any method, such as dip coating, spin coating, spray coating, brushing, or the like. This slurry type coating agent may be directly coated on the first resin layer 221 and/or the second resin layer 222, and may have excellent corrosion resistance, wear resistance, and adhesive effects.

This fire-resistant coating layer 300 may block flames of 1000 °C or higher. Accordingly, flame propagation to the neighboring battery cell 3 or the electrode assembly 10 within the receiving portion 110 may be blocked. That is, the fire-resistant coating layer 300 is coated on the upper surface of the second resin layer of the pouch film 200 to enhance the fire resistance, so that when a thermal event occurs, the heat transfer phenomenon of the flame generated from the trigger cell to another neighboring secondary battery may be delayed as much as possible. When a battery module or battery pack including such battery cells 3 is mounted on a vehicle, the heat propagation time between the battery cells 3 may be delayed, thereby ensuring the safety of the driver in an emergency. It will be possible to satisfy the condition requiring a delay time so that the driver may evacuate before the flame is exposed to the outside of the battery module or battery pack in the event of an ignition of the battery cell 3 within the battery module or battery pack. Therefore, the increasing safety risk in battery modules and battery packs that require further increasing the energy density of battery cells in a limited space for high energy concentration may be solved according to the present disclosure.

The thickness of this fire-resistant coating layer 300 may be 0.03 to 0.05 mm (30 to 50 µm). The thickness may be selected in consideration of moldability while securing fire resistance performance. The thickness of the fire-resistant coating layer 300 is an example, and may be relatively thicker than the thicknesses of the first resin layer 221, the second resin layer 222, and the base layer 210.

The pouch film 200 according to this embodiment may be formed by coating the fire-resistant coating layer 300 on the entire area of the lower surface of the first resin layer 221, as mainly shown in FIG. 4. Accordingly, the lower surface of the first resin layer 221 of the pouch film 200 may be coated with the fire-resistant coating layer 300, so that the ignition of the pouch film 200 of the corresponding pouch unit 100 from discharged substances such as the venting gas discharged inside the trigger cell may be delayed as much as possible. Accordingly, heat accumulation in the trigger cell and heat transfer to other cells may be minimized, thereby improving the safety of the cell.

However, the fire-resistant coating layer 300 may not be coated on the edge portion of the first resin layer 221. This is to facilitate bonding by thermal fusion when sealing the receiving portion 110 in FIG. 1. Additionally, since it is necessary to provide a space for the adhesive layer to be applied, the fire-resistant coating layer 300 may be omitted from the edge portion of the first resin layer 221.

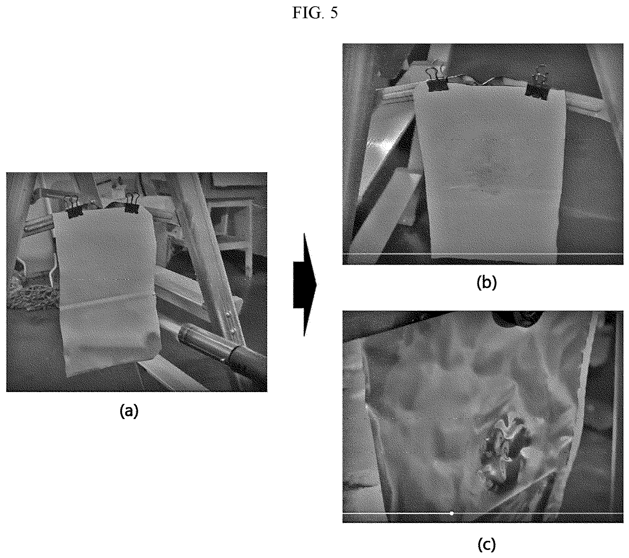

FIG. 5 is a photograph showing a flame test performed while coating a fire-resistant coating layer on one surface of a pouch film according to an embodiment of the present disclosure.

The fire-resistant coating layer 300 may be coated on the upper surface of the second resin layer 222. Referring to FIG. 5, the fire-resistant coating layer 300 is coated on one surface of the pouch film 200 on the left side of the drawing (FIG. 5 (a)). And, the results of a flame test with a torch at a close distance (e.g., 15 cm) are shown. Looking at FIG. 5 (b), the flame is not transferred to the pouch film 200 and the flame propagation is minimized, which confirms the fire resistance, and in FIG. 5 (c), the other surface of the pouch film 200 is not coated with the fire-resistant coating layer 300, which confirms that there is no flame blocking ability and no fire resistance.

Meanwhile, modified examples of the pouch film 200 will be described.

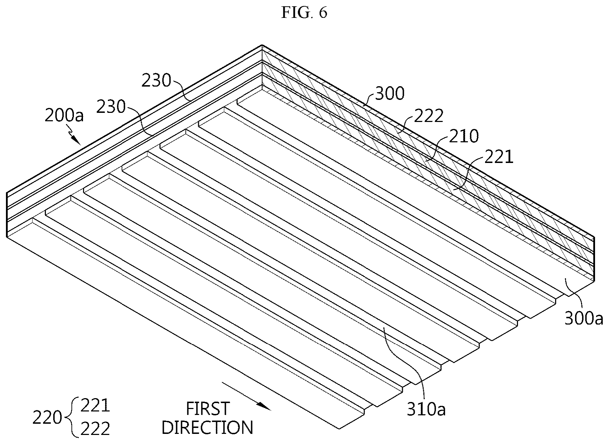

FIGS. 6 to 8 are views of modified examples of FIG. 4 and show a state in which various types of discharge paths are formed in a first resin layer.

Referring to FIGS. 6 to 8, the pouch film 200a is formed by stacking a first resin layer 221 and a second resin layer 222 on the lower surface and the upper surface of the base layer 210, respectively, with the base layer 210 interposed therebetween, and by coating the fire-resistant coating layers 300, 300a on the lower surface of the first resin layer 221 and the upper surface of the second resin layer 222.

In particular, the fire-resistant coating layer 300a may be formed by being coated on one area of the lower surface of the first resin layer 221 or the upper surface of the second resin layer 222. Hereinafter, a discharge path 310a to be described later may also be provided in the second resin layer 222, and for convenience of description, an example in which a discharge path 310a is formed in the first resin layer 221 will be mainly described. When the fire-resistant coating layer 300a is coated on one area of the upper surface of the second resin layer 222, it may be possible to easily discharge the discharged substances including the venting gas generated outside the receiving portion 110, that is, outside the battery cell 3.

The fire-resistant coating layer 300a may be partially coated on the lower surface of the first resin layer 221. And, the area where the fire-resistant coating layer 300a is not coated may form a discharge path 310a for the discharged substances including the venting gas generated from the electrode assembly 10. Accordingly, various types of discharge paths 310a may be provided in the first resin layer 221 of the pouch film 200.

Specifically, referring mainly to FIG. 6, the fire-resistant coating layer 300a is formed along the first direction on the plate surface of the first resin layer 221, but sections where the fire-resistant coating layer 300a is not coated are formed at regular intervals. Accordingly, a discharge path 310a in the first direction may be formed in the fire-resistant coating layer 300a.

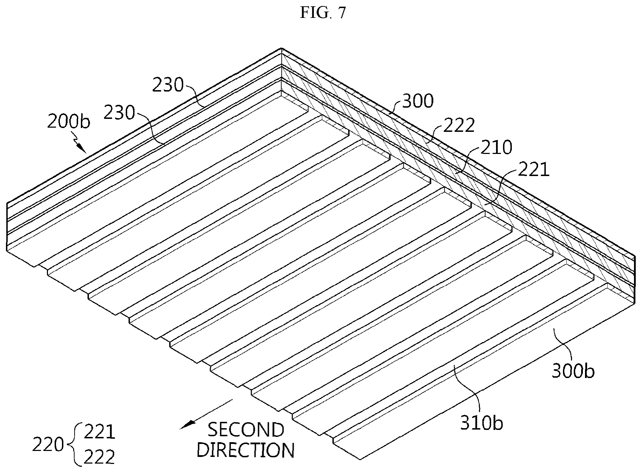

Referring to FIG. 7 as another modified example, in the fire-resistant coating layer 300b of the pouch film 200b, sections where the fire-resistant coating layer 300b is not coated may be formed along the second direction on the plate surface of the first resin layer 221, and the discharge path 310b may be formed in the second direction.

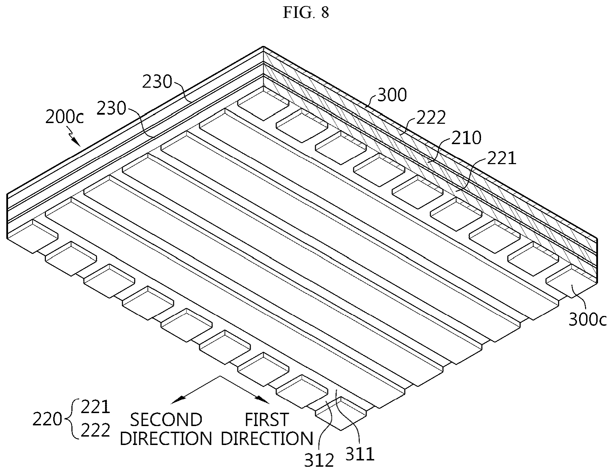

In the pouch film 200c of FIG. 8 as still another modified example, the discharge paths 311, 312 may be formed by partially mixing the first direction and the second direction. That is, near one end of the pouch film 200, a fire-resistant coating layer 300c may be formed in a form where the discharge paths 311, 312 in the first direction and the second direction are mixed. And, the discharge path 311 in the first direction is exemplified in the central portion of the first resin layer 221.

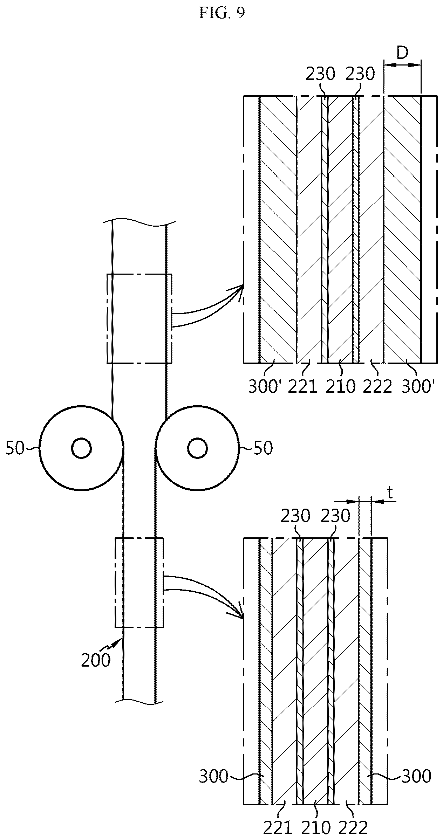

In these modified examples, the discharge paths 310a, 310b, 311, 312 may be formed by the difference in coating thickness (t, see FIG. 9) that occurs depending on whether the fire-resistant coating layers 300, 300a, 300b, 300c are coated or not.

Accordingly, the lower surface of the first resin layer 221 of the pouch films 200, 200a, 200b, 200c may be coated with the fire-resistant coating layers 300, 300a, 300b, 300c, so that the ignition of the pouch films 200, 200a, 200b, 200c of the corresponding pouch unit 100 from discharged substances such as the venting gas discharged inside the trigger cell may be delayed as much as possible.

In addition, a rapid and easy discharge of the discharged substance may be induced. That is, the discharged substance including the venting gas generated inside the receiving portion 110 may be easily moved along the discharge paths 310a, 310b, 311, 312 in the first direction or the second direction, and may be quickly discharged to the edge of the battery cell 3 and discharged to the outside of the battery cell 3. Accordingly, heat accumulation in the trigger cell and heat transfer to other cells may be minimized, thereby improving the safety of the cell.

Hereinafter, a process of manufacturing the pouch films 200, 200a, 200b, 200c according to the previous embodiment will be described.

FIG. 9 is a schematic diagram of a squeeze process of a pouch film according to an embodiment of the present disclosure.

The process of disposing the layered structure of the pouch films 200, 200a, 200b, 200c is briefly described.

First, a step of applying and laminating a second resin layer 222 to the upper surface of the base layer 210 may be performed. The base layer 210 is provided, and an adhesive layer 230 may be applied to the upper surface of the base layer 210. Then, the second resin layer 222 may be applied to the upper surface of the base layer 210 and laminated. Before and after this process, a surface treatment of the base layer 210 may be performed in the middle.

Next, a step of applying and laminating a first resin layer 221 to the lower surface of the base layer 210 may be performed. An adhesive layer 230 may be interposed between the base layer 210 and the first resin layer 221. And, before laminating the first resin layer 221, a surface treatment may be performed to improve the adhesion on the adhesive surface with the base layer 210. On the other hand, in the manufacturing process of the pouch films 200, 200a, 200b, 200c, the order of laminating the first resin layer 221 and the second resin layer 222 on the base layer 210 may be reversed, and the laminating process of the first resin layer 221 and the second resin layer 222 may be performed simultaneously.

Next, a step of coating a fire-resistant coating layer 300 on at least one of the first resin layer 221 or the second resin layer 222 may be performed.

Referring to FIG. 9, in this embodiment, a process of coating a fire-resistant coating layer 300 on both the first resin layer 221 and the second resin layer 222 is described. Specifically, the fire-resistant coating layer 300 may be applied as a fire-resistant coating layer 300' with an initial coating thickness D on both the lower surface of the first resin layer 221 and the upper surface of the second resin layer 222. In particular, the fire-resistant coating layer 300' may be formed by being coated on the entire area of the plate surface of the first resin layer 221. And, in the step of coating the fire-resistant coating layer 300', the thickness control may be performed by applying the refractory material and then squeezing. That is, as shown in FIG. 9, the pouch film 200 with the fire-resistant coating layer 300' applied thereto is inserted between the rolls 50. Accordingly, after the squeeze process is performed to be squeezed, the coating thickness (t) of the fire-resistant coating layer 300 is reduced to a preset thickness of 0.03 to 0.05 mm. Here, the thickness of the fire-resistant coating layer 300 is determined by the gap between the plurality of rolls 50, and the thickness, pressing force, degree of pressing, and the like of the fire-resistant coating layer 300 may be set differently by adjusting the gap.

Meanwhile, in the case of the previous modified examples, a masking treatment is required before coating the fire-resistant coating layer 300a. That is, in the step of coating the fire-resistant coating layer 300a, the fire-resistant coating layer 300a is formed by being coated on one area of the plate surface of the first resin layer 221, and the area where the fire-resistant coating layer 300a is not coated may form a discharge path 310a of the discharged substances including the venting gas generated from the electrode assembly 10.

To this end, a masking treatment is performed before coating the fire-resistant coating layer on the lower surface of the first resin layer 221. That is, the area where the fire-resistant coating layer 300a is not coated is masked along the discharge path 310a on the first resin layer 221. In the case of FIG. 6, the lower surface of the first resin layer 221 is masked in the first direction. Then, the fire-resistant coating layer 300a is coated on the entire area of the lower surface of the first resin layer 221. And, after the squeeze is performed, the masking may be removed to form the discharge path 310a. Likewise, as shown in FIGS. 7 and 8, the discharge path 310b, 310c, 311, 312 may be formed through the masking treatment in the first direction or the second direction before coating the fire-resistant coating layers 300b, 300c on the lower surface of the first resin layer 221.

Meanwhile, these discharge paths 310a, 310b, 310c, 311, 312 are preferably formed on a side other than the side on which the electrode leads 20a, 30a in FIG. 1 are formed, and for example, if the electrode leads 20a, 30a of the electrode assembly 10 are formed on one side of the pouch films 200, 200a, 200b, 200c in the first direction, the discharge paths may be formed, excluding the one side in the first direction, in another second direction or in directions mixed with the first direction, but on the other side in the first direction not on one side. That is, the discharge paths 310a, 310b, 310c, 311, 312 are not disposed on the side where the electrode leads 20a, 30a are disposed, so that the exposure of the electrode leads 20a, 30a to discharged substances including the venting gas may be minimized. A masking treatment corresponding to the discharge paths 310a, 310b, 310c, 311, 312 may be performed. By performing these steps, fire-resistant coating layers 300, 300a, 300b, 300c are coated on the upper surface of the second resin layer 222 of the pouch film 200 to enhance the fire resistance, so that when a thermal event occurs, the heat transfer phenomenon of the flame generated from the trigger cell to another neighboring secondary battery may be delayed as much as possible.

Additionally, the lower surface of the first resin layer 221 of the pouch film 200 may be coated with fire-resistant coating layers 300, 300a, 300b, 300c, so that the ignition of the pouch film 200 of the corresponding pouch unit 100 from discharged substances such as the venting gas discharged inside the trigger cell may be delayed as much as possible, and a rapid and easy discharge of the discharged substances may be induced. Accordingly, heat accumulation in the trigger cell and heat transfer to other cells may be minimized, thereby improving the safety of the cell.

The battery cell 3 according to the present disclosure includes a pouch film 200 according to the present disclosure as described above. The pouch unit 100 processed with the pouch film 200 may be an internal component of a pouch-type battery cell 3 by having a receiving portion 110 as shown in FIG. 1, or may be a configuration for accommodating a cylindrical battery cell 3 by having a receiving portion 110 with a shape corresponding to a jelly-roll type.

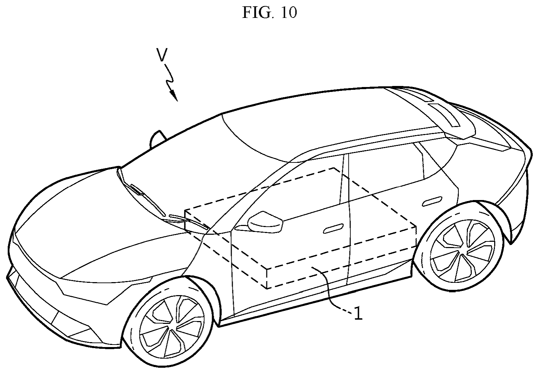

Meanwhile, the battery module and battery pack 1 (see FIG. 10) according to the present disclosure include the battery cell 3 according to the present disclosure as described above.

The battery module including the battery cell 3 described above may be applied to various devices. Representative examples of such devices include transportation means such as electric bicycles, electric vehicles, hybrid vehicles, and the like, but the present disclosure is not limited thereto. The battery pack 1 including such a battery module is suitable for utilization as a battery pack 1 for an electric vehicle. Additionally, it may also be used as an energy source for an energy storage system (ESS).

FIG. 10 is a view for describing a vehicle according to an embodiment of the present disclosure.

Referring to FIG. 10, the battery pack 1 according to the present disclosure may be applied to a vehicle V such as an electric vehicle or a hybrid vehicle. That is, the vehicle V according to the present disclosure may include a battery pack 1 according to the present disclosure. The battery pack 1 may be installed in a body frame under a vehicle seat or in a trunk space, and the battery pack 1 may be disposed in a reversed order if necessary when installed in a vehicle.

The present disclosure has been hereinabove described with regard to a limited number of embodiments and drawings, but the present disclosure is not limited thereto and various modifications and variations will be possible by those having ordinary skill in the technical field pertaining to the present disclosure within the technical aspect of the present disclosure and the scope of the appended claims and their equivalents.

Meanwhile, the terms indicating directions as used herein such as upper, lower, left, right, front, and rear are used for convenience of description only, and it is obvious to those skilled in the art that the terms may change depending on the position of the stated element or an observer.

### [Explanation of Reference Signs]

| | | | |
|---|---|---|---|
| 1: | battery pack | 3: | battery cell |
| 10: | electrode assembly | 20: | positive electrode |
| 21: | positive electrode current collector | 22: | positive electrode active material coating layer |
| 30: | negative electrode | 31: | negative electrode current collector |
| 32: | negative electrode active material coating layer | 40: | separator |
| 50: | roll | 100: | pouch unit |
| 110: | receiving portion | 200, 200a, 200b, 200c: | pouch film |
| 210: | base layer | 220: | resin layer |
| 221: | first resin layer | 222: | second resin layer |
| 230: | adhesive layer | 300, 300a, 300b, 300c: | fire-resistant coating layer |
| 310a, 310b, 311, 312: | discharge path | | |
| t: | coating thickness | | |

## Claims

1. A pouch film, comprising:
a base layer;
a plurality of resin layers formed on one surface and the other surface of the base layer, respectively, with the base layer interposed therebetween; and
a fire-resistant coating layer formed by being coated on at least one resin layer of the plurality of resin layers.

2. The pouch film according to claim 1,
wherein the base layer, the plurality of resin layers, and the fire-resistant coating layer are provided to be stacked in a layered structure, and
the fire-resistant coating layer is disposed on the outermost surface of the layered structure.

3. The pouch film according to claim 2,
wherein the plurality of resin layers comprise:
a first resin layer formed on the lower surface of the base layer based on the stacking direction of the layered structure; and
a second resin layer formed on the upper surface of the base layer based on the stacking direction of the layered structure,
wherein the fire-resistant coating layer is formed by being coated on the lower surface of the first resin layer and the upper surface of the second resin layer, respectively.

4. The pouch film according to claim 3,
wherein the fire-resistant coating layer is formed by being coated on the entire area of the lower surface of the first resin layer or the upper surface of the second resin layer.

5. The pouch film according to claim 3,
wherein the pouch film is used for sealing the electrode assembly,
wherein the fire-resistant coating layer is formed by being coated on one area of the lower surface of the first resin layer or the upper surface of the second resin layer, and
the area where the fire-resistant coating layer is not coated forms a discharge path for the discharged substances including the venting gas generated from the electrode assembly.

6. The pouch film according to claim 5,
wherein the discharge path is formed by the difference in coating thickness that occurs depending on whether the fire-resistant coating layer is coated or not.

7. The pouch film according to claim 5,
wherein the discharge path is formed in a first direction on the plate surface of the first resin layer or the second resin layer, in a second direction perpendicular to the first direction, or in directions of partially mixing the first direction and the second direction.

8. The pouch film according to claim 1,
wherein the fire-resistant coating layer is made of a ceramic material, an inorganic material, a MICA material, an aerogel, or a combination thereof.

9. The pouch film according to claim 8,
wherein the thickness of the fire-resistant coating layer is 0.03 to 0.05 mm.

10. A method for manufacturing the pouch film, comprising:
a step of applying and laminating a first resin layer to one surface of a base layer;
a step of applying and laminating a second resin layer to the other surface of the base layer; and
a step of coating a fire-resistant coating layer on at least one of the first resin layer or the second resin layer.

11. The method for manufacturing the pouch film according to claim 10,
wherein in the step of coating the fire-resistant coating layer, a refractory material is applied and then squeezed to adjust the thickness.

12. The method for manufacturing the pouch film according to claim 11,
wherein the pouch film is used for sealing the electrode assembly, and
in the step of coating the fire-resistant coating layer,
the fire-resistant coating layer is formed by being coated on the entire area of the plate surface of the first resin layer or the second resin layer, or on one area of the plate surface of the first resin layer, and
the area where the fire-resistant coating layer is not coated forms a discharge path for the discharged substances including the venting gas generated from the electrode assembly.

13. The method for manufacturing the pouch film according to claim 12,
wherein the area where the fire-resistant coating layer is not coated is formed by a masking treatment along the discharge path on the first resin layer or the second resin layer, and then removing the masking after the squeeze is performed.

14. A battery cell, comprising:
an electrode assembly; and
a pouch unit having a receiving portion in which the electrode assembly is accommodated,
wherein the pouch unit is provided by processing with a pouch film in which a fire-resistant coating layer is coated on at least one surface of one surface facing the electrode assembly or the other surface opposite to the one surface.

15. The battery cell according to claim 14,
wherein the pouch film is provided to be stacked in a layered structure, and
the fire-resistant coating layer is disposed on the outermost surface of the layered structure.

16. The battery cell according to claim 15,
wherein the pouch film comprises:
a base layer; and
a plurality of resin layers formed on one surface and the other surface of the base layer, respectively, with the base layer interposed therebetween,
wherein the fire-resistant coating layer is formed by being coated on at least one resin layer of the plurality of resin layers, respectively.

17. The battery cell according to claim 16,
wherein the plurality of resin layers comprise:
a first resin layer formed on the lower surface of the base layer based on the stacking direction of the layered structure; and
a second resin layer formed on the upper surface of the base layer based on the stacking direction of the layered structure,
wherein the fire-resistant coating layer is formed by being coated on the lower surface of the first resin layer and the upper surface of the second resin layer.

18. A battery module comprising a battery cell according to any one of claims 14 to 17.

19. The battery module according to claim 18,
wherein the fire-resistant coating layer is disposed on the outermost surface of the pouch film and is formed by being coated on one area, and the area where the fire-resistant coating layer is not coated forms a discharge path for the discharged substances including the venting gas generated from the electrode assembly.

20. A vehicle comprising a battery module according to claim 18.
